# EUROPÄISCHE PATENTANMELDUNG

(11) **EP 3 795 389 A1**
(43) Veröffentlichungstag der Anmeldung: **24.03.2021**
(21) Anmeldenummer: 20193760.4
(22) Anmeldetag: 01.09.2020
(51) Int. Cl.: B60G 17/019, B60G 11/27, F16F 9/05

(54) **LUFTFEDER MIT EINEM INNERHALB EINES FEDERBALGS ANGEORDNETEN SENSORMODUL**

(30) Priorität: 17.09.2019 DE 102019214092
(71) Anmelder: ContiTech Luftfedersysteme GmbH, 30165 Hannover (DE)
(72) Erfinder: Peters, Herwig - c/o Continental AG, 30419 Hannover (DE); Mosich, Manuel - c/o Continental AG, 30419 Hannover (DE)
(74) Vertreter: Continental Corporation

(57) **Zusammenfassung**

Die Erfindung betrifft eine Luftfeder (2, 2'), mit einem schlauchförmigen, mit einem elastomeren Werkstoff hergestellten Federbalg (4), der an seinem oberen Endabschnitt druckdicht an einem oberen Luftfederdeckel (6) oder an einem oberen Luftfederkolben sowie an seinem unteren Endabschnitt an einem unteren Luftfederdeckel (8) oder einem unteren Luftfederkolben befestigt ist, und bei dem innerhalb des Federbalgs (4) ein Sensormodul (10, 10') mit mindestens einem Sensor (11), eine elektronische Aufbereitungseinheit (12, 12') und eine Sendereinheit (14, 14') angeordnet sind. Um die aufbereiteten Sensordaten des Sensormoduls (10, 10') einem Betreiber oder Dienstleister schnell und ortsunabhängig zur Verfügung zu stellen ist, gemäß der Erfindung vorgesehen, dass die Sendereinheit (14,14') ein Mobilfunkmodul (16, 16') aufweist, mittels dem die Sensordaten des Sensormoduls (10, 10') über ein Mobilfunknetz und das Internet (loT) an einen Cloudserver (20) sendbar, dort in einem zugeordneten Cloud-Datenspeicher (22) abspeicherbar sowie von autorisierten Personen einsehbar und abrufbar sind.

## Beschreibung

Die Erfindung betrifft eine Luftfeder, mit einem schlauchförmigen, mit einem elastomeren Werkstoff hergestellten Federbalg, der an seinem oberen Endabschnitt druckdicht an einem oberen Luftfederdeckel oder an einem oberen Luftfederkolben sowie an seinem unteren Endabschnitt an einem unteren Luftfederdeckel oder einem unteren Luftfederkolben befestigt ist, und bei dem innerhalb des Federbalgs ein Sensormodul mit mindestens einem Sensor, eine elektronische Aufbereitungseinheit und eine Sendereinheit angeordnet sind.

Luftfedern werden in vielfältigen Anwendungen zur Federung und Dämpfung eingesetzt. In Fahrzeugen, wie Kraftfahrzeugen, Schienenfahrzeugen und Kabinenbahnen sind Luftfedern jeweils zwischen einem Bauteil einer Fahrzeugachse, wie einem Achsträger, einem Querlenker oder einem Längslenker, und einem tragenden Bauteil einer Fahrzeugkarosserie, wie einem Fahrzeugrahmen oder einem Karosserieholm, angeordnet und dienen zu Abfederung des jeweiligen Fahrzeugaufbaus gegen Stöße von Unebenheiten der Fahrbahn oder des Gleises. Bei stationären Maschinen, Industrieanlagen und Gebäudeteilen sind Luftfedern jeweils zwischen einem Boden oder Fundament und einer tragenden Basis angeordnet. Sie dienen als pneumatisch aktive Elemente zur Schwingungsisolierung der jeweiligen Maschine, Anlage oder des Gebäudeteils gegen Erschütterungen, die vom Boden ausgehen.

Luftfedern werden meistens ohne eine integrierte Sensorik hergestellt, an Kunden ausgeliefert und dort betrieben. Es sind jedoch bereits Luftfedern vorgeschlagen worden, bei denen Sensoren, wie Drucksensoren, Temperatursensoren und Abstandssensoren, innerhalb der Federbälge angeordnet sind, deren Sensorsignale kabelgebunden oder kabellos an ein internes oder externes Steuergerät übertragen werden.

Aus der DE 10 2007 020 043 B4 sind mehrere Ausführungen eines Federbeins bestehend aus einem Teleskopstoßdämpfer und einer Luftfeder bekannt, bei denen jeweils ein Wegsensor innerhalb des Federbalgs der Luftfeder an einem Deckel angeordnet ist. Die Übertragung des Sensorsignals von dem Abstandssensor zu einer innerhalb eines Aufnahmezylinders an einem Dämpferzylinder des Teleskopstoßdämpfers oder außen auf einer Abdeckplatte der Luftfeder angeordneten Steuer- und/oder Regeleinheit erfolgt entweder über eine elektrische Leitung oder per Funk in RFID-Technologie. In einer Anordnung mehrerer derartiger Federbeine erfolgt die Übertragung der aufbereiteten Sensorsignale von den Steuer- und/oder Regeleinheiten der Federbeine zu einer extern angeordneten zentralen Steuereinheit über elektrische Leitungen.

Aus der DE 10 2012 108 684 A1 ist eine Anordnung mehrerer Luftfedern eines Luftfedersystems beschrieben. In den Luftfedern ist jeweils mindestens ein Sensor angeordnet. Die Sensorsignale der Sensoren werden über zugeordnete Funksender, vorzugsweise über UHF-Sender, an ein mit einem Empfänger versehenes, extern angeordnetes zentrales Steuergerät übertragen.

Bei den bekannten Luftfedern beziehungsweise Anordnungen von Luftfedern stehen die Sensordaten der Sensoren nur der lokalen Steuerung zur Verfügung. Die Sensordaten können zwar in einem Datenspeicher eines zentralen Steuergerätes gespeichert und bedarfsweise zu einem späteren Zeitpunkt ausgelesen sowie analysiert werden, dies setzt jedoch eine entsprechende Infrastruktur voraus und ist mit zeitlichen Verzögerungen verbunden.

Der Erfindung lag daher die Aufgabe zugrunde, eine Luftfeder der eingangs genannten Bauart vorzustellen, bei der die aufbereiteten Sensordaten des Sensormoduls einem Betreiber oder Dienstleister schnell und ortsunabhängig zur Verfügung gestellt werden können.

Diese Aufgabe ist durch eine Luftfeder mit den Merkmalen des Anspruchs 1 gelöst. Vorteilhafte Weiterbildungen sind in den abhängigen Ansprüchen definiert.

Die Erfindung betrifft demnach eine Luftfeder mit einem schlauchförmigen, mit einem elastomeren Werkstoff hergestellten Federbalg, der an seinem oberen Endabschnitt druckdicht an einem oberen Luftfederdeckel oder an einem oberen Luftfederkolben sowie an seinem unteren Endabschnitt an einem unteren Luftfederdeckel oder einem unteren Luftfederkolben befestigt ist. Innerhalb des Federbalgs sind ein Sensormodul mit mindestens einem Sensor, eine elektronische Aufbereitungseinheit und eine Sendereinheit angeordnet. Bei den Sensoren des Sensormoduls kann es sich um einen Drucksensor, einen Temperatursensor und/oder einen Abstandssensor handeln.

Damit die aufbereiteten Sensordaten des Sensormoduls einem Betreiber oder Dienstleister schnell und ortsunabhängig zur Verfügung gestellt werden können, ist bei dieser Luftfeder gemäß der Erfindung vorgesehen, dass die Sendereinheit ein Mobilfunkmodul aufweist, mittels dem die Sensordaten des Sensormoduls über ein Mobilfunknetz und das Internet an einen Cloudserver sendbar, dort in einem zugeordneten Cloud-Datenspeicher abspeicherbar sowie von autorisierten Personen einsehbar und abrufbar sind.

Somit können die Sensordaten von autorisierten Personen weitgehend unmittelbar nach deren Entstehen aus großer Entfernung eingesehen und analysiert werden. Geht zum Beispiel aus dem zeitlichen Verlauf von Drucksensordaten einer bestimmten Luftfeder eine starke Schwankung des Balgdruckes der Luftfeder hervor, kann dies als eine Leckage interpretiert werden, deren Druckverlust im Betrieb durch eine häufige Belüftung der Luftfeder wieder ausgeglichen wird. Es kann somit frühzeitig eine Reparatur oder ein Austausch der Luftfeder veranlasst werden, bevor diese aufgrund einer massiven Beschädigung oder Leckage vollständig ausfällt. Die Generierung und Versendung eines Identifikationscodes für die Sensordaten einer Luftfeder ist nicht erforderlich, da die Identifikation durch eine in das Mobilfunkmodul eingelegte SIM-Karte oder durch eine Registrierung des Mobilfunkmoduls automatisch gegeben ist.

Das Mobilfunkmodul ist bevorzugt derart ausgebildet, dass die Sensordaten nach einem GSM-, UMTS-, LTE- oder 5G-Standard über die nächstgelegene stationäre Mobilfunkantenne in das Internet einspeisbar sind. In Europa sind zumindest die Ballungsräume und stadtnahe Gebiete vollständig von den Mobiltelefonnetzen abgedeckt, so dass die Einspeisung der Sensordaten in das Internet fast überall gewährleistet ist.

Besonders bei einer stationären Anwendung einer Luftfeder kann das Mobilfunkmodul aber auch derart ausgebildet sein, dass die Sensordaten nach einem WLAN-Standard oder WiFi-Standard über einen zugeordneten DSL-Router oder DSL-Hotspot in das Internet einspeisbar sind.

Wenn eine Luftfeder jedoch außerhalb terrestrischer Funk- oder Festnetztelefonnetze zum Einsatz kommt, also beispielsweise in sehr gering besiedelten Gebieten, ist eine derartige Nutzung des Mobilfunkmoduls sinnvoll, gemäß der die Sensordaten nach einem Satellitentelefonstandard über den nächstgelegenen Funktelefonsatelliten in das Internet einspeisbar sind.

Zur Energieversorgung können das Sensormodul, die Aufbereitungseinheit und die Sendereinheit über einen Kabelstecker oder eine Steckerbuchse an eine externe Spannungsquelle anschließbar sein.

Alternativ dazu oder zusätzlich kann dem Sensormodul, der Aufbereitungseinheit und der Sendereinheit zur Energieversorgung auch eine intern an der Luftfeder angeordnete elektrische Batterie als Spannungsquelle zugeordnet sein. Diese Batterie muss dann in regelmäßigen Zeitabständen, zum Beispiel im Rahmen von Wartungsarbeiten am Fahrzeug, ausgetauscht oder durch den Anschluss an eine externe Spannungsquelle elektrisch aufgeladen werden.

Um bei vorübergehend fehlender Netzanbindung eine Zwischenspeicherung der Sensordaten zu ermöglichen, ist der Aufbereitungseinheit oder der Sendereinheit zur Zwischenspeicherung der Sensordaten bei Bedarf ein intern an der Luftfeder angeordneter Datenspeicher zugeordnet. Die zwischengespeicherten Sensordaten werden dann ins Internet eingespeist, sobald die oben erwähnte Anbindung an ein funktechnisches Kommunikationsnetz wieder gegeben ist.

Zur weiteren Verdeutlichung der Erfindung ist der Beschreibung eine Zeichnung mit einem Ausführungsbeispiel beigefügt. In dieser zeigt
Fig. 1 eine erfindungsgemäße Luftfeder in einer schematischen Querschnittsansicht, und
Fig. 2 eine Anordnung mehrerer Luftfedern gemäß Fig. 1 mit einer schematischen Darstellung der Übertragung von Sensordaten.

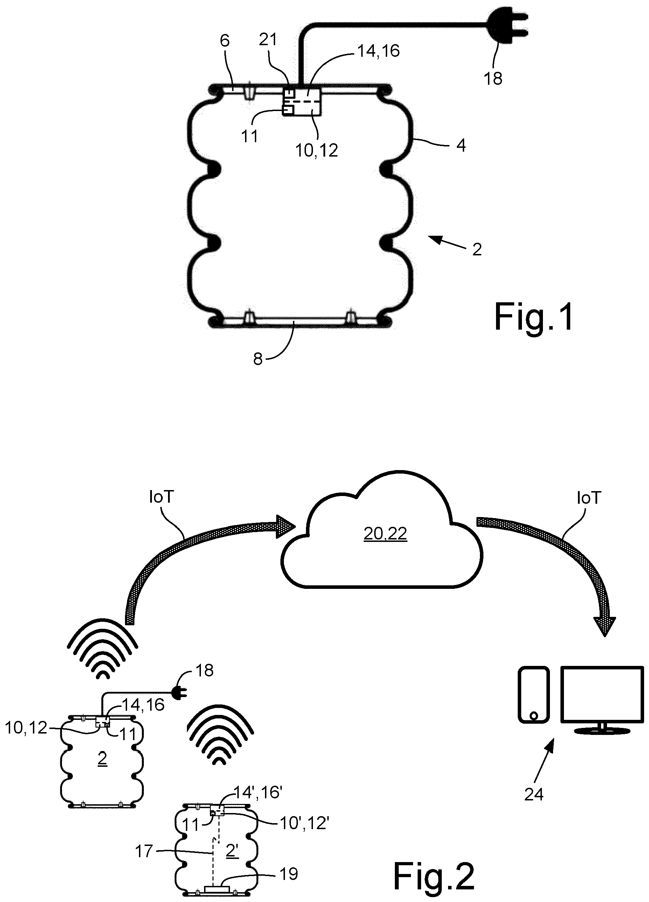

Die in Fig. 1 dargestellte Luftfeder 2 weist einen schlauchförmigen Federbalg 4 aus einem faserverstärktem elastomeren Werkstoff auf, der an seinen beiden Endabschnitten druckdicht an einem oberen Luftfederdeckel 6 beziehungsweise an einem unteren Luftfederdeckel 8 befestigt ist. Die Luftfeder 2 ist vorliegend beispielhaft als eine Faltenbalgfeder mit einem Zweifaltenbalg 4 ausgebildet.

Innerhalb des Federbalgs 4 sind ein Sensormodul 10 mit mindestens einem Sensor 11, eine elektronische Aufbereitungseinheit 12 und eine Sendereinheit 14 an dem oberen Luftfederdeckel 6 angeordnet. Die Sendereinheit 14 weist ein Mobilfunkmodul 16 auf, mit dem die Sensordaten des Sensormoduls 10 über ein Mobilfunknetz und das Internet IoT an einen Cloudserver 20 sendbar sind. Dort sind diese Sensordaten in einem zugeordneten Cloud-Datenspeicher 22 abspeicherbar sowie von autorisierten Personen einsehbar sowie abrufbar.

Das Sensormodul 12, die Aufbereitungseinheit 12, die Sendereinheit 14 und das Mobilfunkmodul 16 sind wie dargestellt vorzugsweise baulich in einem gemeinsamen Gehäuse zusammengefasst. In diesem Gehäuse ist gemäß dem gezeigtem Ausführungsbeispiel zusätzlich ein interner Datenspeicher 21 angeordnet, in dem ermittelte Sensordaten, etwa bei nicht vorhandener Funkverbindung, zwischengespeichert und später ausgelesen werden können.

Zur Energieversorgung können das Sensormodul 10, die Aufbereitungseinheit 12, die Sendereinheit 14 und das Mobilfunkmodul 16 über ein elektrisches Kabel sowie einen Kabelstecker 18 an eine nicht dargestellte externe Spannungsquelle angeschlossen werden. Wie Fig. 2 am Beispiel der Luftfeder 2' zeigt, kann die Energieversorgung für die genannten Module und Einheiten 10', 12', 14', 16' auch mittels einer elektrischen Batterie 19 erfolgen, die am unteren Luftfederdeckel 9 befestigt sowie über eine elektrische Leitung 17 mit diesen Module und Einheiten 10', 12', 14', 16' verbunden ist.

Die Übertragung von Sensordaten der Sensormodule 10, 10' von zwei Luftfedern 2, 2' ist in Fig. 2 außerdem schematisch veranschaulicht. Die in regelmäßigen Zeitabständen erfassten Sensordaten der Sensormodule 10, 10' werden in den jeweils zugeordneten Aufbereitungseinheiten 12, 12' aufbereitet und über mittels der Sendereinheiten 14, 14' per Funkt versendet. Dies erfolgt über das jeweilige Mobilfunkmodul 16, 16', bei dem es sich jeweils bevorzugt um ein GSM-Modul handelt. Die von den Mobilfunkmodulen 16, 16' versendeten Sensordaten werden über die nächstgelegene stationäre Mobilfunkantenne in das Internet IoT eingespeist und gelangen dort zu einem Cloudserver 20, von dem die Sensordaten in einem zugeordneten Cloud-Datenspeicher 22 abgespeichert werden. Von einer autorisierten Person können die in dem Cloud-Datenspeicher 22 abgespeicherten Sensordaten von einem beliebigen Ort mit Internetanschuss 24 aus eingesehen und abgerufen werden. In der Fig. 2 ist hierzu beispielhaft ein Personal Computer PC vorgesehen. Somit ist eine online-Fernüberwachung der Luftfedern 2, 2' möglich, die zum Beispiel genutzt werden kann, um rechtzeitig Reparatur- und Wartungsmaßnahmen an den Luftfedern 2, 2' vornehmen zu können.

### Bezugszeichenliste

- 2, 2': Luftfeder, Faltenbalgluftfeder
- 4: Federbalg, Zweifaltenbalg
- 6: Oberer Luftfederdeckel
- 8: Unterer Luftfederdeckel
- 10, 10': Sensormodul
- 11: Sensor
- 12, 12': Aufbereitungseinheit
- 14, 14': Sendereinheit
- 16, 16': Mobilfunkmodul
- 17: Elektrische Leitung
- 18: Kabelstecker
- 19: Elektrische Batterie
- 20: Cloudserver
- 21: Intern angeordneter Datenspeicher
- 22: Cloud-Datenspeicher
- 24: Internetanschluss
- DSL: Digital Subscriber Line
- GSM: Global System of Mobile Communications
- IoT: Internet of Things
- LTE: Long Term Evolution
- PC: Personal Computer
- RFID: Radio Frequency Identification
- SIM: Subscriber Identity Module
- UHF: Ultra High Frequency
- UMTS: Universal Mobile Telecommunications System
- WiFi: Wireless Fidelity
- WLAN: Wireless Local Area Network
- 5G: Fifth Generation

## Patentansprüche

1. Luftfeder (2, 2'), mit einem schlauchförmigen, mit einem elastomeren Werkstoff hergestellten Federbalg (4), der an seinem oberen Endabschnitt druckdicht an einem oberen Luftfederdeckel (6) oder an einem oberen Luftfederkolben sowie an seinem unteren Endabschnitt an einem unteren Luftfederdeckel (8) oder einem unteren Luftfederkolben befestigt ist, und bei dem innerhalb des Federbalgs (4) ein Sensormodul (10, 10') mit mindestens einem Sensor (11), eine elektronische Aufbereitungseinheit (12, 12') und eine Sendereinheit (14, 14') angeordnet sind, **dadurch gekennzeichnet, dass** die Sendereinheit (14, 14') ein Mobilfunkmodul (16, 16') aufweist, mittels dem die Sensordaten des Sensormoduls (10, 10') über ein Mobilfunknetz und das Internet (loT) an einen Cloudserver (20) sendbar, dort in einem zugeordneten Cloud-Datenspeicher (22) abspeicherbar sowie von autorisierten Personen einsehbar und abrufbar sind.

2. Luftfeder nach Anspruch 1, **dadurch gekennzeichnet, dass** das Mobilfunkmodul (16, 16') derart ausgebildet ist, dass die Sensordaten nach einem GSM-, UMTS-, LTE- oder 5G-Standard über die nächstgelegene stationäre Mobilfunkantenne in das Internet (loT) einspeisbar sind.

3. Luftfeder nach Anspruch 1, **dadurch gekennzeichnet, dass** das Mobilfunkmodul (16, 16') derart ausgebildet ist, dass die Sensordaten nach einem WLAN-Standard oder WiFi-Standard über einen zugeordneten DSL-Router oder DSL-Hotspot in das Internet (loT) einspeisbar sind.

4. Luftfeder nach Anspruch 1, **dadurch gekennzeichnet, dass** das Mobilfunkmodul (16, 16') derart ausgebildet ist, dass die Sensordaten nach einem Satellitentelefonstandard über den nächstgelegenen Funktelefonsatelliten in das Internet (loT) einspeisbar sind.

5. Luftfeder nach einem der Ansprüche 1 bis 4, **dadurch gekennzeichnet, dass** das Sensormodul (10), die Aufbereitungseinheit (12) und die Sendereinheit (14) über einen Kabelstecker (18) oder eine Steckerbuchse an eine externe Spannungsquelle anschließbar sind.

6. Luftfeder nach einem der Ansprüche 1 bis 5, **dadurch gekennzeichnet, dass** dem Sensormodul (10'), der Aufbereitungseinheit (12') und der Sendereinheit (14') als Spannungsquelle eine intern angeordnete elektrische Batterie (19) zugeordnet ist.

7. Luftfeder nach einem der Ansprüche 1 bis 6, **dadurch gekennzeichnet, dass** der Aufbereitungseinheit (12, 12') oder der Sendereinheit (14, 14') zur Zwischenspeicherung der Sensordaten ein intern angeordneter Datenspeicher (21) zugeordnet ist.
